# EUROPEAN PATENT APPLICATION

(11) **EP 3 865 423 A1**
(43) Date of publication of application: **18.08.2021**
(21) Application number: 19870632.7
(22) Date of filing: 17.09.2019
(51) Int. Cl.: B65D 85/804, B65D 75/58, A47J 31/10

(54) **SINGLE-MEASURE FILTERED-COFFEE UNIT AND METHOD FOR PRODUCTION AND INFUSION OF THE UNIT**

(30) Priority: 10.10.2018 BR 102018070867
(71) Applicant: Café Rancheiro Agro Industrial LTDA, 132-035 Anápolis (BR)
(72) Inventor: FERREIRA DE SOUZA, Jailton, 75115-050 Anápolis (BR)
(74) Representative: Sach, Greg Robert
(86) International application number: PCT/BR2019/050405
(87) International publication number: WO 2020/073107

(57) **Abstract**

Refers to a single dose unit (1) for brewed coffee, which comprises an upper layer (3) and a lower layer (4), both of which are filter elements (3a) made from cellulose fibers and other synthetic fibers, and traces of plastic fibers, thus consisting of a fully biodegradable filter element (3a), with the upper and lower layers (3 and 4) sealed in a circular manner, forming a sealing edge (5) with a pouch for ground coffee (CF) between the layers, and an injector device (2) disposed in the center of the upper layer (3) in a specific production process of perforation and sealing, as well as the process of brewing the brewed coffee in a coffee maker, with an upper spreader (15b) and a lower spreader unit (15) both provided with longitudinal grooves (22) in order to obtain brewed coffee without any pressure.

## Description

The present invention refers to a single dose unit for brewed coffee that comprises at least two layers of filtering material, manufactured from ecological fibers in the shape of a circular sachet, commonly and internationally known as "POD Coffee", but equipped with a device that allows the "introduction of water directly into the coffee powder, with water flow by gravity, as in traditional brewing, very low pressure, and the process of manufacturing and obtaining the single dose together with the water infusion process to obtain the brewed coffee in a single dose, in an automated way, without losing the characteristics of the coffee made in a strainer, due to the obtention process that resembles free fall, with low water pressure, and temperature up to 84 degrees.

Several types of single-dose coffee and other beverages are known, but in terms of coffee, we can mention, espresso (obtained in capsules) and filtered or brewed coffee. In the case of brewed coffee, that is, traditional coffee, after being heated (between 80 and 90°C), the water is poured over the ground coffee, which can be prepared using a cloth or paper filter. The result is a less dense beverage than the espresso, with a pleasant aroma and flavors. Espresso coffee is a drink prepared in a professional machine, through the passage, under high pressure (9bars), of water heated to 90°C through the ground coffee. The result of this process is a beverage with greater consistency, aromatic and with a greater amount of solids dissolved by volume where all the flavors and substances are concentrated, however, due to the aromatic concentrations, their characteristics are completely different in relation to the traditional brewed coffee.

The expression "pod coffee" has become a universal term for single-dose coffee, without pressing, in which a POD consists of a single-dose unit with coffee powder, between two layers of filtering material normally in circular shape, that is, disc format , to be infused in special machines for coffee brewing, where water is applied by pressure and, when pressed over the POD, or disc, penetrates the top layer, passes through the coffee powder and through the bottom layer thus obtaining a coffee brewed by pressure.

In the state of the art there are numerous documents citing single dose coffee in sachet form, for example the Brazilian patent, filed under No. BR202016026743-4, which is a sachet for espresso and infusion; the Dutch patent filed in Brazil under No. BR11 2016 015880-6, whose invention refers to a sachet for use in a coffee machine, in the form of an envelope with a first and second disc-shaped sheet, forming two interconnected sheets through a sealing seam, forming a filter through which the water under pressure passes, passing through the first sheet, through the coffee powder and exiting through the second sheet; there is the Brazilian patent No. MU 8800622-0 Roasted coffee powder sachet, which consists of a bag of permeable TNT material or filter paper, with a rectangular or square format where the coffee powder is packed and sealed to be immersed in water to obtain the coffee infusion. Likewise, the following patents can be cited: MU8600825-0, whose claim was an individual coffee sachet, in a paper filter with a top opening and a false bottom; patent PI 0702385, a coffee sachet formed by a non-woven filter, with a cord to facilitate the immersion and removal of the sachet from the water; another individual packaging in the form of a vacuum-packed sachet was claimed in patent PI-1001537-0, containing various formats with vacuum sealing and cord for handling; finally, there is the patent BR 20 2012 018540-2 BR 20 2012 018540-2, which is a constructive arrangement in coffee strainer sachet, formed by a porous and filtering body, with a pre-cut section, sides with laminar bases cut, joined and vertically closed. The other single-dose models for coffee, known in the state of the art, are basically all in capsules, to be used in espresso coffee machines.

It is known in the state of the art several patents for single dose units for infusion using a type of injector, such as patents EP 1966060; WO 2015136268; EP 0179641; GB 2123685 and GB 2121762 which determine single dose units for coffee and / or tea, in the form however of a sachet for infusion designed so that the sachet works vertically, with the flange-containing injector's main characteristic being injecting water over the coffee powder, which complicates the entire process of preparing the beverage, since it becomes a difficult-to-use provision in automated machines, therefore, these last cited patents bring an "injector" which is external to the sachet, acting as a mechanical support to keep the sachet in an upright position and receiving the injection of water over the coffee or tea. This process keeps the coffee in a disposition in relation to water not allowing the properties that give the texture, appearance and flavor of the brewed coffee to be completely extracted during the infusion.

Therefore, the single doses of coffee that exist and are known for infusion without pressure by machines are in the form of square or rectangular sachets, used on a large scale for teas of various flavors and also the so-called POD COFFEE, which strains the coffee using special machines that carry water by pressing on the said POD, in which the water when pressed over the POD, or disc, penetrates the upper filter layer, passes through the coffee powder from top to bottom and, passes through the lower layer, thus obtaining a brewed coffee, by pressure.

Thus, it is not known in the state of the art a process of coffee brewing in individual dose, in an automated way, through its own machine, with standardization of the coffee brewed without pressure, whose invention and claim will be better understood in line with the figures in annex, where:
**Figure 1** is the side-view of a single-dose unit for brewed coffee.
**Figure 2** in an upper isometric view of a single-dose unit for brewed coffee.
**Figure 3** is a section side view of a single-dose unit for brewed coffee.
**Figure 4** is a section upper isometric view of a single-dose unit for brewed coffee.
**Figure 5** is an upper isometric view of the Injector.
**Figure 6** is a lower isometric view of the Injector.
**Figure 7** is a section side view of the Injector.
**Figure 8** illustrates a top isometric view of the automated process of industrialization of the single dose unit for brewed coffee.
**Figure 9** shows the same view as figure 1, however, without the section of the single-dose unit for brewed coffee.
**Figure 10** shows a bottom perspective view of part of the extraction machine.
**Figure 11** shows the disposition to extract the single dose for brewed coffee, in an extraction machine.
**Figure 12** shows the same view as figure 9, however, in a side section view.
**Figure 13** shows a sectional view of the extraction machine's injection and diffusion assembly, with the single-dose unit for brewed coffee in section.

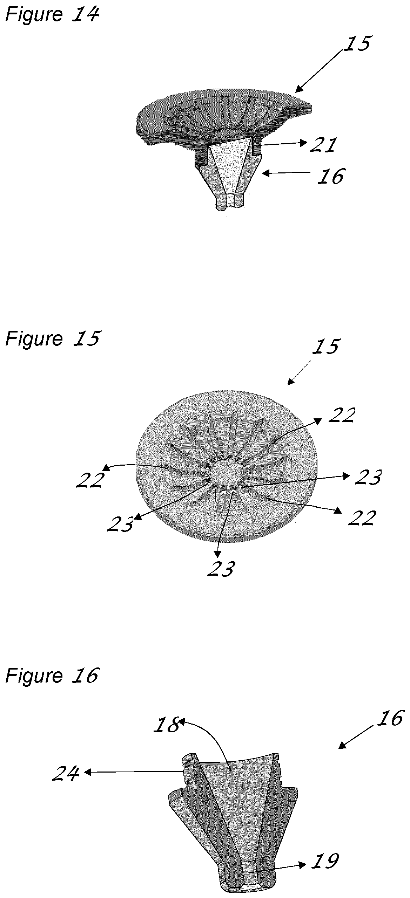

**Figure 14** shows a lower disperser for the single dose unit seat for brewed coffee and the diffuser nozzle, both in lateral section in an isometric view.
**Figure 15** shows a top isometric view of the bottom disperser of the single-dose unit for brewed coffee.
**Figure 16** shows a lower isometric view of the diffuser nozzle.

As seen in the attached figures, the present invention refers to a single dose unit (1) for brewed coffee, comprising an upper layer (3) and a lower layer (4), both of which are filter elements (3a), manufactured from cellulose fibers and other synthetic fibers and traces of plastic fibers, thus consisting of a fully biodegradable filter element (3a), whose upper and lower layers (3 and 4) are sealed in a circular manner, forming a sealing edge (5) in such a way that a pouch is formed between the layers, containing ground coffee (CF).

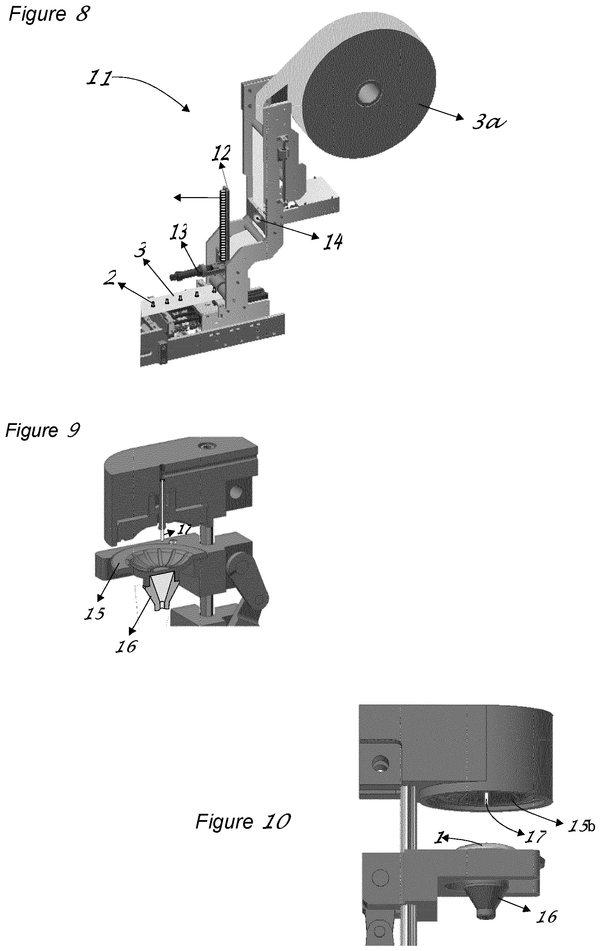

Thus, this configuration in circular or disk format is what is known in the state of the art and commonly called sachet, and internationally known as POD Coffee, however, the claim of the present invention is characterized by the innovation presented, which is the insertion of an injector device (2), placed in the center of the single dose unit (1) in its upper layer (3), through the process shown in figure 8.

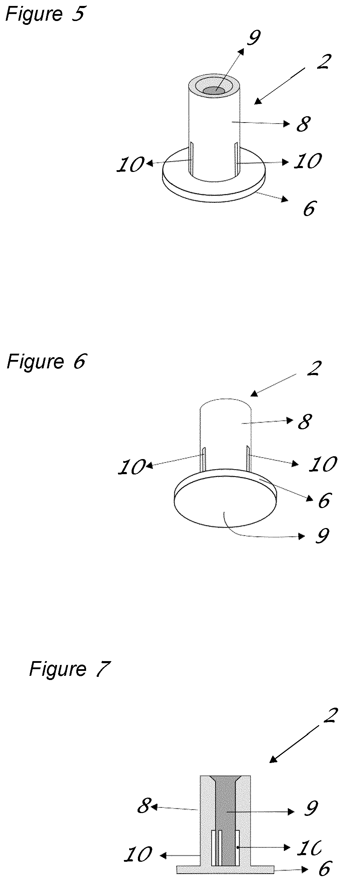

The injector device (2), as shown in figures 5 and 6, consists of a plastic device, provided with a sealing edge (6), a vertical body (8), an internal channel (9) and, at the bottom of said vertical body (8), lateral slots (10) from the bottom to the half height of said vertical body (8), where water dispersion occurs when injected into said internal channel (9) by means of an injection needle (17) of the extraction machine (20).

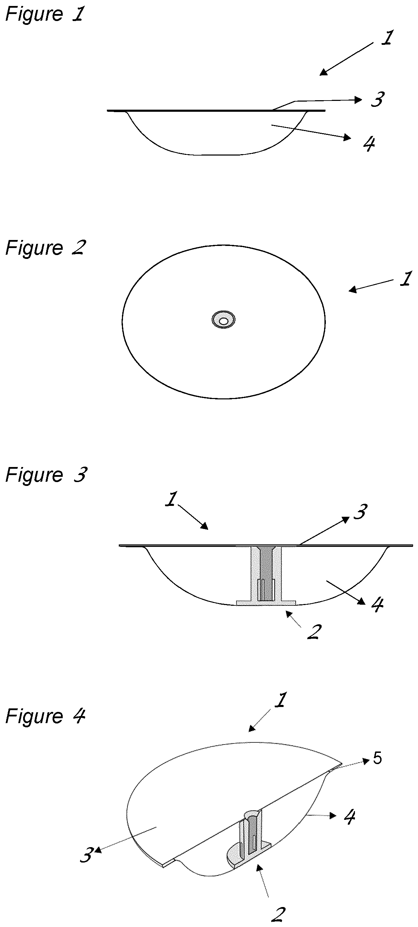

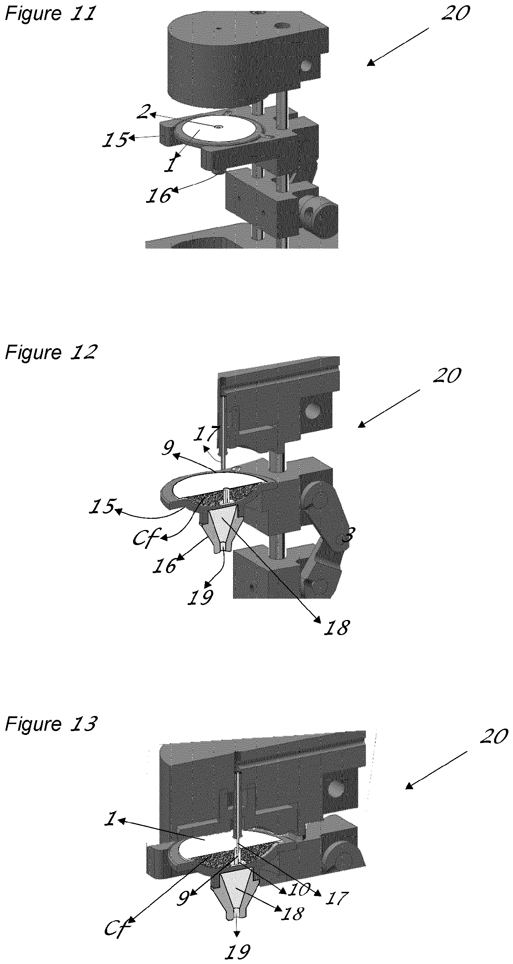

The sealing of the upper layer (3) to the lower layer (4) and, from the injector (2) to said upper layer (3) of the filtering element (3a), takes place in a heating process that happens in the moment of pressing one layer to another and, in the case of the injection device (2), the sealing takes place in the process shown in figure 8, a process of pressing said injection device (2), so that the sealing edge (6) when pressed at a certain temperature seals, thus, both said edge (6) and the vertical body (8) are on the inside of the compartment formed in the single dose unit (1) directly in contact with the ground coffee (CF) as shown in figures 4, 10 and 11.

The production process of the single-dose unit (1), as shown in figure 8, takes place with the use of an automatic sealing machine (11) of the injector device (2) properly disposed in an injector magazine type container (12) through the automated action of an applicator (13) mounted on a sealing machine (11), in the line of passage of the filter element (3a), as seen in figure 8. After the injector device (2) is properly sealed in the film of the filter element (3a), this film is pulled to the next stage, which is the pressing and sealing of the upper layer (3) to the lower layer (4) which is pulled in the opposite direction until the deposit point of the coffee powder (CF) so that when the said coffee powder (CF) is deposited on the lower layer (4), the upper layer (3) is pressed with the consequent sealing of the sealing edge (5) and the cutting of the single-dose coffee unit (1) into disc shape, as shown in the isometric drawing of figure 2.

The brewed coffee infusion process using the single dose unit (1) is applied using a heating and water injection machine, of the coffee maker type, but with a special compartment to introduce said single dose unit (1), containing an upper dispersion unit (15b) and a lower dispersion unit (15) both provided with longitudinal grooves (22) so that, when water is injected through the needle (17) into the injection channel (9) and said water exits said injector (2) through the lateral slots (10) directly inside the single dose unit (1) in contact with the stored coffee powder (CF), water filling will occur momentarily inside the compartment formed by the closing of said upper dispersion unit (15b) and said lower dispersion unit (15) so that the water will flow through the grooves (22) providing the straining of the coffee without pressure, which will flow into the grooves (22) of the lower dispersing unit (15) to the drip channels (23) passing through the diffuser cone (18) of the extractor nozzle (16), flowing through the diffuser channel (19) to the cup, thus obtaining a brewed coffee, as in traditional molds, by paper filters or fabric strainer.

The lower disperser (15), in addition to containing grooves (22) and drip channel (23), also has a bottom fitting base (21) provided with internal threads to receive the extractor nozzle (16), this one provided with seal (24) at the fitting part to said lower disperser (15).

Thus, in the single-dose device of the present invention, the injector device (2) is internal to the layers that form the sachet, so that the lateral slots (10), arranged in the vertical body (8) allow the water to be diffused exactly in the middle of the powder, that is, directly in contact with coffee powder. In addition, said injector device (2) has the function of keeping the two layers of the filter element (3 and 4) at the ideal height and, also, the sealing edge (6) acts as a base to keep the sachet in a horizontal position, allowing the alignment of the single dose unit (1) in relation to the extraction machine, and essentially receives the water injection of water directly distributed in the coffee powder, through the lateral slots (10) that act as dispersers.

Therefore, the horizontal arrangement of the single-dose unit (1), the position of the injector (01), and the diffusion of water directly into the coffee allows adequate extraction to reach the texture, appearance and flavor of the brewed coffee.

## Claims

1. **SINGLE DOSE UNIT FOR BREWED COFFEE** comprising at least two layers of filtering material, manufactured from ecological fibers in the shape of a circular sachet, commonly and internationally known as "POD Coffee" whose top and bottom layers are sealed on a circular edge and which is characterized for containing in the single dose unit (1) an injector device (2).

2. **SINGLE DOSE UNIT FOR BREWED COFFEE** according to claim 1, **characterized by** the fact that the injector device (2) comprises a vertical body (8), provided with a upper guide (7), a sealing edge (6), an internal channel (9) and, at the bottom of said vertical body (8), lateral slots (10) extending from the bottom to half the height of said vertical body (8).

3. **PRODUCTION PROCESS OF THE SINGLE DOSE UNIT** using an automated sealing machine equipped with a coil with filter element, characterized for containing a perforating matrix (14), an applicator (13) and an injector magazine (12), so that the filter element (3a) travels a path in the direction of receiving spaced holes, by means of the perforating matrix (14) in the upper layer (3) which, in sequence, will receive the introduction of the injector device (2) by means of repetitive movements of the applicator (13), so that the sealing edge (6) is pressed and sealed to said layer (3) of the filter element on one side and, on the other side of said upper layer (3) is the vertical body (8) so that when the bottom layer (2) is pulled in the opposite direction to the deposit point of the coffee powder (CF), one layer is pressed to the other, consequently sealing the sealing edge (5) and cutting the coffee single dose unit (1) in a disc shape.

4. **SINGLE DOSE UNIT INFUSION PROCESS** using a heating and water injection machine, of the coffee maker type, **characterized by** having an upper dispersion unit (15b) and a lower dispersion unit (15), both equipped with longitudinal grooves (22) so that, when water is injected through the needle (17) into the injection channel (9) and said water exits said injector (2) through the lateral slots (10) directly inside the single dose unit (1) in contact with the stored coffee powder (CF), water will filled the compartment formed by the closing of said upper dispersion unit (15b) and said lower dispersion unit (15) so that the water will flow through the grooves (22) providing the straining of the coffee without pressure, which will run through the grooves (22) of the said lower dispersion unit (15) up to the drip channels (23) passing through the diffuser cone (18) of the extractor nozzle (16), flowing through the diffuser channel (19) to the cup.
